# EUROPÄISCHE PATENTSCHRIFT

(11) **EP 3 335 419 B1**
(45) Veröffentlichungstag und Bekanntmachung des Hinweises auf die Patenterteilung: **19.01.2022**
(21) Anmeldenummer: 16745040.2
(22) Anmeldetag: 29.06.2016
(51) Int. Cl.: H04N 7/18

(54) **FAHRZEUGKAMERAVORRICHTUNG ZUR AUFNAHME EINER UMGEBUNG EINES KRAFTFAHRZEUGS SOWIE FAHRERASSISTENZVORRICHTUNG ZUR OBJEKTERKENNUNG MIT EINER SOLCHEN FAHRZEUGKAMERAVORRICHTUNG**
VEHICLE CAMERA DEVICE FOR CAPTURING THE SURROUNDINGS OF A MOTOR VEHICLE AND DRIVER ASSISTANCE DEVICE FOR DETECTING OBJECTS WITH SUCH A VEHICLE CAMERA DEVICE
DISPOSITIF DE CAMÉRA DE VÉHICULE POUR ENREGISTRER UN ENVIRONNEMENT D'UN VÉHICULE AUTOMOBILE AINSI QUE DISPOSITIF D'ASSISTANCE À LA CONDUITE POUR RECONNAISSANCE D'OBJET AVEC UN TEL DISPOSITIF DE CAMÉRA DE VÉHICULE

(30) Priorität: 14.08.2015 DE 102015215561
(43) Veröffentlichungstag der Anmeldung: 20.06.2018
(73) Patentinhaber: Conti Temic microelectronic GmbH, 90411 Nürnberg (DE)
(72) Erfinder: KRÖKEL, Dieter, 88097 Eriskirch (DE)
(74) Vertreter: Continental Corporation
(86) Internationale Anmeldenummer: PCT/DE2016/200299
(87) Internationale Veröffentlichungsnummer: WO 2017/028848

(56) Entgegenhaltungen:
- WO-A1-2015/062603
- DE-A1-102006 016 673
- DE-A1-102013 221 882
- DE-U1-202010 002 827

## Beschreibung

Die vorliegende Erfindung betrifft eine Fahrzeugkameravorrichtung zur Aufnahme einer Umgebung eines Kraftfahrzeugs nach dem Oberbegriff des Anspruchs 1. Ferner betrifft die Erfindung eine Fahrerassistenzvorrichtung zur Objekterkennung mit einer solchen Fahrzeugkameravorrichtung.

Fahrerassistenzvorrichtungen mit einer oder mehreren Kameras werden zur Auswertung des Umfelds eines Kraftfahrzeugs, beispielsweise zur Auswertung von Fahrspuren, Verkehrszeichen, Ampeln und anderer Verkehrsteilnehmer eingesetzt. Die Kameras dienen in der Regel zur Bilderfassung aus dem in Fahrtrichtung vorausliegenden Bereich des Kraftfahrzeugs. Derartige Kameras haben typischerweise einen Öffnungswinkel von etwa 40 bis 45 Grad.

Zukünftige Anwendungen wie die Erkennung von Verkehrsteilnehmern an Kreuzungen oder die Ampelerkennung beim Halten in vorderster Reihe benötigen einen möglichst großen Öffnungswinkel, auch bekannt als horizontaler Bildwinkel, um die sich beim nahen Auffahren im Peripherbereich des Bildes befindlichen Objekte erfassen zu können. Demgegenüber erfordert beispielsweise hochautomatisiertes Fahren das Erkennen von Objekten und Fahrbahnstrukturen auch in großer Entfernung, wofür eine ausreichende Winkelauflösung erforderlich ist.

Aus der Druckschrift DE 10 2011 103 378 B3 ist eine Überwachungseinrichtung bekannt mit Kameras, welche jeweils eine Mehrzahl von Bildsensoren aufweisen, die derart ausgebildet sind, dass sie jeweils unterschiedliche Bereiche einer Szene mit variabler Gegenstandsweite abtasten. Die Bildsensoren sind jeweils mit einer Optik ausgestattet, welche unabhängig von der Gegenstandsweite dieselbe Auflösung bereitstellt, und wobei die Bildsensoren, welche für unterschiedliche Gegenstandsweiten bestimmt sind, Objekte mit unterschiedlicher Festbrennweite aufweisen.

Die Druckschrift DE 20 2010 002 827 U1 beschreibt eine Kameraüberwachungseinrichtung für einen rückwärtigen Fahrraum eines Kraftfahrzeuges, mit einem Gehäuse, in welches zwei Kameras zur jeweiligen Bilderfassung des rückwärtigen Fahrraumes angeordnet sind. Die Kameras sind voneinander abweichend ausgerichtet, sodass deren jeweiligen Erfassungsbereiche sich zumindest in vertikaler Richtung zumindest teilweise überlappen. Die zweite Kamera ist abweichend zur ersten Kamera zum Boden geneigt, um den Nahbereich des rückwärtigen Fahrraumes zu erfassen.

Aus der DE 10 2013 221 882 A1 ist eine Kamera für ein Fahrerassistenzsystem in einem Fahrzeug bekannt. Die Kamera umfasst eine Optik mit einer ungleichmäßigen oder ungleichförmigen Winkelauflösung im Sichtfeld der Kamera. Die Optik ist dabei bevorzugt derart ausgestaltet, dass die Winkelauflösung vom Zentrum des Sichtfelds zum Rand des Sichtfeldes stetig abnimmt.

Die Druckschrift WO2015/062603A1 beschreibt ein Fahrerassistenzsystem mit einer Kamera mit einem horizontalen Bildwinkel und einem vertikalen Bildwinkel, eine Steuer- und Auswerteeinheit sowie eine Anzeige. Die Kamera weist eine Optik mit einer ungleichförmigen Winkelauflösung im Sichtfeld der Kamera auf. Die Optik ist bevorzugt derart gestaltet, dass in einem im Raumwinkelbereich um die optische Achse gelegenen Zentralbereich des Sichtfeldes eine erhöhte Winkelauflösung realisiert ist.

Aus der Druckschrift DE10 2006 016 673 A1 ist ein Fahrzeugsichtsystem bekannt, mit einer Bilderfassungseinrichtung und einer der Bilderfassungseinrichtung vorgelagerten Linse, die zumindest eine erste und eine zweite Brennweite aufweist, zum Abbilden eines Objektes auf die Bilderfassungseinrichtung. Die Bilderfassungseinrichtung und die Linse sind derart relativ zueinander angeordnet und derart ausgeführt, dass eine Abbildung eines Objektes auf einen ersten Bilderfassungsbereich der Bilderfassungseinrichtung auf der ersten Brennweite basiert, und dass eine Abbildung auf einen zweiten Bilderfassungsbereich der Bilderfassungseinrichtung auf der zweiten Brennweite basiert.

Der Erfindung liegt die Aufgabe zugrunde, eine verbesserte Fahrzeugkameravorrichtung vorzugsschlagen, welche die Erfassung einer Umgebung des Kraftfahrzeugs mit einem möglichst großen Erfassungsbereich und einer ausreichenden Winkelauflösung zur Objekterkennung ermöglicht.

Diese Aufgabe wird durch eine Fahrzeugkameravorrichtung mit den Merkmalen des Anspruchs 1 sowie durch eine Fahrerassistenzvorrichtung mit den Merkmalen des Anspruchs 12 gelöst. Vorteilhafte oder bevorzugte Ausführungsformen der Erfindung sind in den Unteransprüchen, der nachfolgenden Beschreibung und durch die Figuren dargelegt.

Erfindungsgemäß wird somit eine Fahrzeugkameravorrichtung zur Aufnahme einer Umgebung eines Kraftfahrzeugs vorgeschlagen. Bei der Umgebung handelt es sich insbesondere um das Vorfeld des Kraftfahrzeugs. Vorzugsweise ist die Fahrzeugkameravorrichtung in eine Fahrerassistenzvorrichtung integrierbar oder mit dieser verbindbar, wobei die Fahrerassistenzvorrichtung insbesondere zur Objekterkennung aus den von der Fahrzeugkameravorrichtung bereitgestellten Bilddaten ausgebildet ist. Bevorzugt ist die Fahrzeugkameravorrichtung eine im Innenraum des Kraftfahrzeugs hinter der Windschutzscheibe anzuordnende und in Fahrtrichtung gerichtete Kamera.

Zur Aufnahme der Umgebung umfasst die Fahrzeugkameravorrichtung eine erste und eine zweite Optronik. Die erste und die zweite

Optronik weisen jeweils eine Optik zur Projektion von Licht sowie mindestens oder genau einen Bildsensor zur Erfassung des von der Optik projizierten Lichts auf. Vorzugsweise sind die Optiken der ersten und zweiten Optronik mit einer Festbrennweite ausgebildet. Beispielsweise sind die erste und die zweite Optronik gemeinsam in einem Gehäuse der Fahrzeugkameravorrichtung angeordnet. Die Integration der zwei Optroniken in dem Gehäuse der Fahrzeugkameravorrichtung erzielt eine kompakte, platzsparende Konstruktion für die Anordnung im Kraftfahrzeug. Bevorzugt sind die erste und die zweite Optronik in die gleiche Blickrichtung unmittelbar aneinander, insbesondere neben- oder übereinander angeordnet. Unter unmittelbar ist hier ein quer zur Blickrichtung verlaufender Abstand von beispielsweise höchstens zehn Zentimetern, insbesondere höchstens fünf Zentimetern, im Speziellen höchstens einem Zentimeter zu verstehen. Besonders bevorzugt verlaufen die optischen Achsen der ersten und zweiten Optronik parallel zueinander.

Die erste Optronik ist ausgebildet, einen ersten Erfassungsbereich und die zweite Optronik einen zweiten Erfassungsbereich von der Umgebung aufzunehmen. Insbesondere geben der Bildsensor und die Optik der jeweiligen Optronik gemeinsam einen horizontalen und einen vertikalen Bildwinkel vor, wobei der horizontale und vertikale Bildwinkel den Erfassungsbereich aufspannen. Insbesondere ist die Fahrzeugkameravorrichtung derart ausgebildet, dass der erste und der zweite Erfassungsbereich unabhängig voneinander aufgenommen, verarbeitet und/oder als voneinander unabhängige Bilddaten an die Fahrerassistenzvorrichtung zur Objekterkennung übermittelt werden können.

Die erste und die zweite Optronik weisen unterschiedlich große Bildwinkel auf. Besonders bevorzugt weisen die erste und die zweite Optronik unterschiedlich große horizontale Bildwinkel auf, sodass sich die Erfassungsbereiche insbesondere in horizontaler Richtung unterscheiden. Alternativ oder optional ergänzend weisen die erste und zweite Optronik unterschiedlich große vertikale Bildwinkel auf, sodass sich die Erfassungsbereiche in vertikaler Richtung unterscheiden. Die unterschiedlich großen Bildwinkel der Erfassungsbereiche ermöglichen die Erfassung von Objekten in verschiedenen Umfeldbereichen des Kraftfahrzeugs mit nur einer Fahrzeugkameravorrichtung.

Die von der ersten und der zweiten Optronik aufgenommenen Erfassungsbereiche weisen einen Überlappungsabschnitt auf. Bei dem Überlappungsabschnitt handelt es sich somit um einen Überschneidungsbereich des ersten und zweiten Erfassungsbereichs. Insbesondere ist in dem von der ersten und zweiten Optronik aufgenommenen Überlappungsabschnitt der gleiche Umgebungsbereich abgebildet. Mit anderen Worten ist der Uberlappungsabschnitt des ersten und zweiten Erfassungsbereichs jeweils ein Bildausschnitt mit dem gleichen Bildinhalt. Bevorzugt weisen die durch die erste und zweite Optronik aufgenommenen Überlappungsabschnitte den gleichen horizontalen und/oder vertikalen Bildwinkel, alternativ oder optional ergänzend jeweils die gleiche Brennweite auf.

Die erste Optronik ist derart ausgestaltet, dass der durch die erste Optronik aufgenommene Überlappungsabschnitt eine andere Winkelauflösung, erfindungsgemäß eine reduzierte Winkelauflösung, als im übrigen Bereich des ersten Erfassungsbereichs aufweist. Somit ist in dem Überlappungsabschnitt vergleichsweise zum übrigen der ersten Optronik erfassten ersten Erfassungsbereich eine andere Winkelauflösung realisiert. Für die unterschiedliche Winkelauflösung ist erfindungsgemäß vorgesehen, dass der Bildsensor in dem den Überlappungsabschnitt aufnehmenden Bereich niedriger auflösend als in dem den übrigen aufnehmenden Bereich ausgebildet ist. Bei dieser Ausgestaltung ergibt sich der Vorteil, dass eine konstruktiv einfache und somit kostengünstige Optik mit einer konstanten Winkelauflösung einsetzbar ist. Als beispielhafte Alternative , die nicht erfindungsgemäß ist, kann ebenso vorgesehen sein, dass der Bildsensor eine homogene Pixel/cm-Auflösung aufweist und die Optik derart ausgebildet ist, dass in dem Überlappungsabschnitt eine andere Winkelauflösung als in dem übrigen Bereich des ersten Erfassungsbereichs realisiert ist.

Aufgrund der Überlappung der Erfassungsbereiche ist ein Umgebungsbereich zweifach abgedeckt, sodass es möglich ist, für die Objekterkennung lediglich den Überlappungsabschnitt einer der beiden Erfassungsbereiche auszuwerten. Vor diesem Hintergrund erzielt die geänderte, insbesondere reduzierte Winkelauflösung im Überlappungsabschnitt den Vorteil, dass der Rechenaufwand zur Verarbeitung des ersten Erfassungsbereichs auf das Nötigste beschränkt ist. Die Aufnahme des übrigen Bereichs des ersten Erfassungsbereichs insbesondere mit einer erhöhten Winkelauflösung ermöglicht hingegen eine Objekterkennung ohne zusätzliche Bildverarbeitung wie z. B. eine virtuelle Pixelerhöhung.

Zugleich hat der Überlappungsabschnitt den Vorteil, dass die erste und die zweite Optronik mit unterschiedlichen Aufnahmeprioritäten ausgebildet werden können. So ist es beispielsweise möglich, die erste Optronik mit einem möglichst großen Erfassungsbereich auszubilden und somit auch Peripherbereiche zu erfassen, wie es im Kreuzungsbereich für die frühzeitige Erkennung von kreuzenden Verkehrsteilnehmern oder auch für die Ampelerkennung in vorderster Reihe erforderlich sein kann. Im Gegenzug kann durch die zweite Optronik z. B. eine detailreiche Aufnahme in dem Überlappungsabschnitt umgesetzt werden, sodass Aufnahmeobjekte sowohl im Nah-, beispielsweise im Entfernungsbereich zwischen einem und 50 Metern, als auch im Fernbereich, beispielsweise im Entfernungsbereich zwischen 50 und 500 Metern erkennbar sind. Folglich ist mit nur einer Fahrzeugkameravorrichtung die Objekterkennung sowohl in verschiedenen Entfernungs-, als auch Umfeldbereichen des Kraftfahrzeugs erzielt.

Gemäß einer bevorzugten Weiterbildung ist in dem durch die erste Optronik aufgenommenen Überlappungsabschnitt eine Winkelauflösung von höchstens 10 Pixeln pro Grad, insbesondere von höchstens 5 Pixeln pro Grad umgesetzt. Alternativ oder optional ergänzend ist in dem übrigen Bereich des ersten Erfassungsbereichs eine Winkelauflösung von mindestens 30 Pixeln pro Grad, insbesondere von mindestens 40 Pixeln pro Grad umgesetzt. Auf diese Weise setzt die erste Optronik im Überlappungsabschnitt eine niedrige und im übrigen Bereich des ersten Erfassungsbereichs eine hohe Abbildungsgenauigkeit um. Auf diese Weise sind lediglich Teilbereiche, die durch die zweite Optronik nicht erfasst sind, mit einer hohen Auflösungsqualität für die Objekterkennung bereitgestellt.

Bei einer möglichen konkreten Umsetzung der Erfindung ist der durch die erste Optronik aufgenommene Überlappungsabschnitt mit einer niedrigeren Winkelauflösung als der durch die zweite Optronik aufgenommene Überlappungsabschnitt aufgenommen. In dem von der zweiten Optronik aufgenommenen Überlappungsabschnitt ist eine Winkelauflösung von beispielsweise mindestens 20 Pixeln pro Grad, insbesondere von mindestens 40 Pixeln pro Grad, im Speziellen von mindestens 80 Pixeln pro Grad realisiert. Auf diese Weise ist durch die zweite Optronik eine hohe Abbildungsgenauigkeit des Überlappungsabschnitts erzielt.

Vom konstruktiven Aufbau ist bevorzugt, dass die erste Optronik mit einem größeren Bildwinkel, im Speziellen mit einem größeren horizontalen und/oder vertikalen Bildwinkel als die zweite Optronik ausgebildet ist. Folglich weist die erste Optronik einen im Vergleich zur zweiten Optronik erweiterten Erfassungsbereich auf. Durch den größeren Bildwinkel sind nahe an dem Kraftfahrzeug, insbesondere der Kraftfahrzeugvorderseite befindliche Objekte im seitlichen und/oder oberen Erfassungsbereich der Fahrzeugkameravorrichtung wie z. B. kreuzende Kraftfahrzeuge oder nahe am Kraftfahrzeug befindliche Ampeln erfassbar. Beispielsweise ist der erste Erfassungsbereich durch die erste Optronik mit einem horizontalen Bildwinkel von mindestens 100 Grad, insbesondere von mindestens 120 Grad, im Speziellen von mindestens 130 Grad aufgenommen. Alternativ oder optional ergänzend ist vorgesehen, dass der erste Erfassungsbereich mit einem vertikalen Bildwinkel von mindestens 40 Grad, insbesondere von mindestens 50 Grad, im Speziellen von mindestens 60 Grad aufgenommen ist.

Bei einer besonders bevorzugten Ausführungsform ist vorgesehen, dass der durch die erste Optronik aufgenommene Überlappungsabschnitt ein Zentrumsbildbereich und der übrige Bereich des ersten Erfassungsbereichs ein den Zentrumsbildbereich umgebender Randbildbereich des ersten Erfassungsbereichs ist. Der Zentrumbildbereich ist insbesondere ein Mittenteilbereich des Sichtfelds der Fahrzeugkameravorrichtung. Vorzugsweise sind der Zentrumsbildbereich und der Randbildbereich konzentrisch zu einer optischen Achse der ersten Optronik angeordnet. Die erste Optronik ist insbesondere ausgebildet und/oder derart anordbar, in dem Zentrumsbildbereich den von dem eigenen Kraftfahrzeug frontalen Straßenverkehr wie z. B. vorausfahrende Kraftfahrzeuge und im Randbildbereich den Straßenverkehr im Peripherbereich wie z. B. kreuzende Kraftfahrzeuge zu erfassen. Bei dieser konstruktiven Ausgestaltung ist somit der Zentrumsbildbereich mit einer vergleichsweise zu dem Randbildbereich anderen, im Speziellen reduzierten Winkelauflösung realisiert. Folglich ist eine hohe Abbildungsgenauigkeit durch die erste Optronik im Randbildbereich umgesetzt, sodass die Objekterkennung wie z. B. die zuvor beschriebene Ampelerkennung oder kreuzende Kraftfahrzeuge ermöglicht ist.

Bei einer weiteren besonders bevorzugten Ausgestaltung der Erfindung entspricht der zweite Erfassungsbereich dem Überlappungsabschnitt. Mit anderen Worten ist mit dem zweiten Erfassungsbereich ausschließlich der mit der ersten Optronik übereinstimmende Überlappungsabschnitt aufgenommen. Besonders bevorzugt entspricht der von der zweiten Optronik aufgenommene Überlappungsabschnitt dem von der ersten Optronik aufgenommenen Zentrumsbildbereich. Auf diese Weise ist es möglich, dass z. B. Fahrspuren, Verkehrszeichen oder vorausfahrende Kraftfahrzeuge in unterschiedlichen Entfernungsbereichen im Zentrumsbildbereich durch die zweite Optronik mit der hierfür erforderlichen Winkelauflösung aufgenommen werden. Dies ermöglicht eine präzise und robuuste Objekterkennung.

Besonders bevorzugt ist die zweite Optronik mit einem horizontalen und/oder vertikalen Bildwinkel von mindestens 30 Grad und/oder von höchstens 50 Grad ausgebildet. Der beschränkte Bildwinkel ist von Vorteil, da mittels der Optik der zweite Erfassungsbereich lichtstark sowie mit einer hohen Abbildungsgenauigkeit mit keinen oder lediglich geringen Aberrationen auf kostengünstige Weise ermöglicht ist. Folglich ist die Objekterkennung im Nah- und Fernbereich insbesondere ohne das Erfordernis einer weiteren Bildverarbeitung bzgl. einer Entzerrung erzielbar.

Die Erfindung betrifft als weiteren Gegenstand eine Fahrerassistenzvorrichtung zur Objekterkennung aus den mit einer Fahrzeugkameravorrichtung nach der vorhergehenden Beschreibung aufgenommenen Erfassungsbereichen der Umgebung des Kraftfahrzeugs. Insbesondere umfasst die Fahrerassistenzvorrichtung die Fahrzeugkameravorrichtung oder ist mit dieser verbunden oder in das Gehäuse der Fahrzeugkameravorrichtung integriert. Bei den zu erkennenden Objekten handelt es sich vorzugsweise um Ampeln, Fahrspuren, Verkehrszeichen und/oder andere Verkehrsteilnehmer.

Vorzugsweise umfasst die Fahrerassistenzvorrichtung eine Bildauswerteeinrichtung, wobei die Fahrzeugkameravorrichtung mit der Bildauswerteeinrichtung zur Übermittlung der aufgenommenen Erfassungsbereiche verbunden ist. Die Bildauswerteeinrichtung ist insbesondere ausgebildet, ein in den von der Fahrzeugkameravorrichtung übermittelten Bilddaten enthaltenes Objekt, insbesondere Ampeln, Fahrspuren, Verkehrszeichen und/oder andere Verkehrsteilnehmer auszuwerten. Hierbei ist es beispielsweise möglich, dass die Bildauswerteeinrichtung den ersten und den zweiten Erfassungsbereich unabhängig voneinander auswertet. Demgegenüber ist es ebenso möglich, dass die Fahrzeugkameravorrichtung derart ausgebildet ist, dass der erste und zweite Erfassungsbereich zu einem Gesamtbild zusammengefügt werden, wobei insbesondere der Überlappungsabschnitt des ersten Erfassungsbereichs durch den Überlappungsabschnitt des zweiten Erfassungsbereichs ersetzt wird. Sofern das Gesamtbild zur Anzeige ausgegeben werden soll, kann eine Interpolation derart erfolgen, dass das Gesamtbild für den Betrachter unverzerrt erscheint.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer Draufsicht ein Kraftfahrzeug mit einer Fahrerassistenzvorrichtung umfassend eine Fahrzeugkameravorrichtung;
- Figur 2: die Fahrzeugkameravorrichtung aus Figur 1 zur Aufnahme eines ersten und einen zweiten Erfassungsbereichs;
- Figur 3: schematisch dargestellt die Winkelauflösung des ersten Erfassungsbereichs aus Figur 2 über den horizontalen Bildwinkel aufgetragen;
- Figur 4: schematisch dargestellt eine Winkelauflösung des zweiten Erfassungsbereichs aus Figur 2 über einen horizontalen Bildwinkel aufgetragen;
- Figur 5: schematisch dargestellt die Winkelauflösung des ersten und zweiten Erfassungsbereichs auf Figur 2 über den horizontalen Bildwinkel aufgetragen.

Einander entsprechende Teile sind in allen Figuren mit denselben Bezugszeichen versehen.

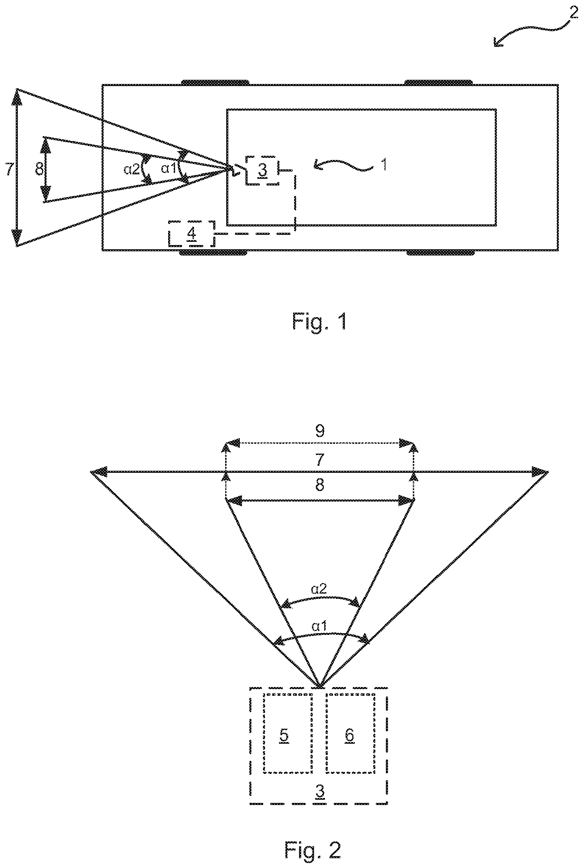

Eine nachfolgend exemplarisch beschriebene und in Figur 1 gezeigte Fahrerassistenzvorrichtung 1 ist in einem Kraftfahrzeug 2 angeordnet und umfasst eine Fahrzeugkameravorrichtung 3. Die Fahrzeugkameravorrichtung 3 ist zur Aufnahme einer Umgebung des Kraftfahrzeugs 2 ausgebildet. Bei der Umgebung handelt es sich um das Fahrzeugvorfeld des Kraftfahrzeugs 2. Die Fahrzeugkameravorrichtung 3 ist zur Übermittlung der aufgenommenen Bilddaten mit einer Bildauswerteeinrichtung 4 der Fahrerassistenzvorrichtung 1 verbunden. Anders als in Fig. 1 schematisch dargestellt, kann die Bildauswerteeinrichtung im Gehäuse der Fahrzeugkameravorrichtung 3 integriert sein. Die Bildauswerteeinrichtung 4 ist ausgebildet, aus den von der Fahrzeugkameravorrichtung 3 übermittelten Bilddaten Objekte wie beispielsweise Ampeln, Fahrspuren und/oder Verkehrszeichen zu erkennen und entsprechende Ausgabesignale auszugeben.

Wie in Figur 2 schematisch dargestellt, umfasst die Fahrzeugkameravorrichtung 3 eine erste und eine zweite Optronik 5, 6, die zur Aufnahme des Umfelds des Kraftfahrzeugs 2 ausgebildet sind. Die erste und zweite Optronik 5, 6 umfassen jeweils eine Optik sowie einen Bildsensor. Beispielsweise sind die erste und die zweite Optronik 5, 6 jeweils als eine Monokamera ausgebildet. Für eine unauffällige Ausgestaltung der Fahrzeugkameravorrichtung 3 in dem Kraftfahrzeug 2 sind die Optroniken 5, 6 z. B. gemeinsam in einem Gehäuse angeordnet. Wie hier rein schematisch dargestellt, sind die zwei Optroniken 5, 6 nebeneinander angeordnet, jedoch kann ebenso vorgesehen sein, die zwei Optroniken 5, 6 übereinander anzuordnen.

Die erste Optronik 5 ist ausgebildet einen ersten Erfassungsbereich 7 und die zweite Optronik 6 einen zweiten Erfassungsbereich 8 von der Umgebung aufzunehmen. Die Optiken der Optroniken 5, 6 sind unterschiedlich ausgebildet, so dass sich die Erfassungsbereiche 7, 8 beispielsweise im Bildverhältnis oder auch durch Verzeichnungen unterscheiden können. Die erste und die zweite Optronik 5, 6 sind ausgebildet, die Erfassungsbereiche 7, 8 mit unterschiedlich großen horizontalen Bildwinkeln α1, α2 aufzunehmen. Hier nicht dargestellt, jedoch alternativ oder optional ergänzend möglich, sind die Erfassungsbereiche 7, 8 durch die Optroniken 5, 6 mit unterschiedlich großen vertikalen Bildwinkeln aufgenommen.

Der horizontale Bildwinkel α1 des ersten Erfassungsbereichs 7 ist größer als der des zweiten Erfassungsbereichs 8 ausgebildet. Beispielsweise ist der erste Erfassungsbereich 7 mit einem horizontalen Bildwinkel α1 von mindestens 100 Grad aufgenommen. Der zweite Erfassungsbereich 8 ist z. B. mit einem horizontalen Bildwinkel α2 von höchstens 50 Grad aufgenommen. Somit ist in dem ersten Erfassungsbereich 7 ein größerer Umgebungsbereich als in dem zweiten Erfassungsbereich 8 abgebildet. Angesichts der unterschiedlich großen Bildwinkel ist eine konstruktive Ausgestaltung der Optroniken 5, 6 möglich, die in den Erfassungsbereichen 7, 8 eine Objekterkennung in verschiedenen Entfernungs- und Umgebungsbereichen erzielt.

Der erste und der zweite Erfassungsbereich 7, 8 weisen einen Überlappungsabschnitt 9 auf. Bei dem Überlappungsabschnitt 9 handelt es sich somit um einen Überschneidungsbereich der beiden Erfassungsbereiche 7, 8. In dem Überlappungsabschnitt 9 der Erfassungsbereiche 7, 8 ist insbesondere der gleiche Umgebungsbereich abgebildet. Während es sich bei dem Überlappungsabschnitt 9 des ersten Erfassungsbereichs 7 lediglich um einen Teilausschnitt des ersten Erfassungsbereichs 7 handelt, bildet der zweite Erfassungsbereich 8 den Überlappungsabschnitt 9. Somit entspricht der vertikale und der horizontale Bildwinkel α2 des zweiten Erfassungsbereichs 8 dem vertikalen und horizontalen Bildwinkel α2 des Überlappungsabschnitts 9.

Bei diesem Ausführungsbeispiel ist der durch die erste Optronik 6 aufgenommene Überlappungsabschnitt 9 ein Zentrumsbildbereich und der übrige Bereich ein dem Zentrumsbildbereich umgebender Randbildbereich des ersten Erfassungsbereichs 7. Die erste Optronik 6 ist beispielsweise derart ausgebildet und/oder angeordnet, in dem Zentrumsbildbereich den frontalen Straßenverkehr wie z. B. vorausfahrende Kraftfahrzeuge und im Randbildbereich den Straßenverkehr im Peripherbereich wie z. B. kreuzende Kraftfahrzeuge des eigenen Kraftfahrzeugs 2 zu erfassen.

Zur Objekterkennung im Überlappungsabschnitt 9, bei diesem Ausführungsbeispiel im Zentrumsbildbereich, ist die Auswertung von lediglich einer der von den Erfassungsbereichen 7, 8 aufgenommenen Überlappungsabschnitten 9 erforderlich. Vor diesem Hintergrund ist vorgesehen, dass der Überlappungsabschnitt 9 des zweiten Erfassungsbereichs 8 für die Objekterkennung ausgewertet wird. Die Auswertung dieses Überlappungsabschnitts 9 ist von Vorteil, da der zweite Erfassungsbereich 8 einen kleineren horizontalen Bildwinkel α als der erste Erfassungsbereich 7 aufweist. Der beschränkte Bildwinkel hat den Vorteil, dass durch die zweite Optronik 6 in dem Überlappungsabschnitt 9 eine hohe Abbildungsgenauigkeit mit keinen oder lediglich geringen Verzeichnungen ermöglicht ist.

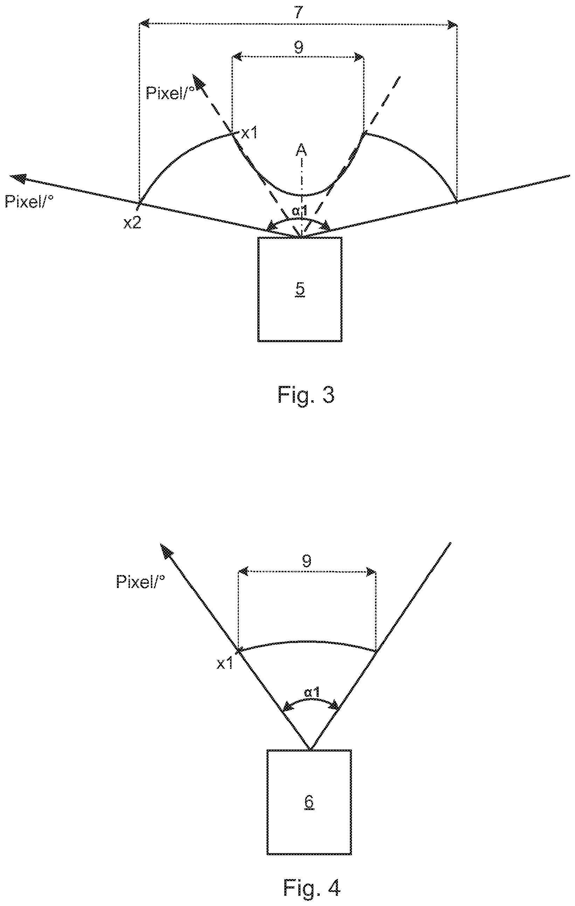

In Figur 3 ist der durch die erste Optronik 5 aufgenommene Erfassungsbereich 7 mit dem horizontalen Bildwinkel α1 dargestellt. Da für die Objekterkennung der von zweiten Optronik 6 aufgenommene Überlappungsabschnitt 9 ausgewertet wird, ist die erste Optronik 5 ausgebildet, den Überlappungsabschnitt 9, hier den Zentrumsbildbereich mit einer reduzierten Winkelauflösung als im übrigen Bereich, hier den Randbildbereich aufzunehmen. Somit ist der Erfassungsbereich 7 durch die erste Optronik 5 mit einer ungleichförmigen Winkelauflösung aufgenommen. Auf diese Weise ist einerseits für die Objekterkennung im Randbildbereich eine ausreichende Winkelauflösung sichergestellt, andererseits der Bildverarbeitungsaufwand für den ersten Erfassungsbereich 7 reduziert.

Die erste Optronik 5 ist beispielsweise derart ausgebildet, dass eine Winkelauflösung xl des Überlappungsabschnitts 9 ausgehend von einer optischen Achse A der ersten Optronik 5 bis zum Randbildbereich rotationssymmetrisch zunimmt. Bei diesem Ausführungsbeispiel ist die erste Optronik 5 derart ausgebildet, dass die Winkelauflösung xl des Überlappungsabschnitts 9 ausgehend von der optischen Achse A der ersten Optronik 5 bis zum Übergang zum Randbildbereich entlang des horizontalen Bildwinkels α1 exponentiell zunimmt. Als mögliche beispielhafte Alternativen kann ebenso vorgesehen sein, dass die Winkelauflösung xl ausgehend der optischen Achse A bis zum Übergang zum Randbildbereich linear steigt oder bis zum Übergang zum Randbildbereich keine Zunahme vorliegt. Z. B. beträgt ein Minimalwert der Winkelauflösung xl bzw. die Winkelauflösung xl für den gesamten Übergangsabschnitt 9 fünf Pixel pro Grad.

Weiterhin ist die erste Optronik 5 ausgebildet, den Randbildbereich mit einer gleichförmig verteilten Winkelauflösung x2 aufzunehmen. Beispielsweise beträgt die Winkelauflösung x2 des Randbildbereichs 20 Pixel pro Grad, sodass eine scharfe Abbildung des Randbildbereichs umgesetzt ist.

In Figur 4 ist der durch die zweite Optronik 6 aufgenommene Erfassungsbereich 8 mit dem horizontalen Bildwinkel α2 dargestellt. Die zweite Optronik 6 ist ausgebildet, den zweiten Erfassungsbereich 8, der den Überlappungsabschnitt 9 bildet, mit einer gleichförmig verteilten Winkelauflösung x1 aufzunehmen. Beispielsweise beträgt die Winkelauflösung xl des Überlappungsabschnitts 9 40 Pixel pro Grad. Auf diese Weise ist eine scharfe Abbildung des Überlappungsbereichs 9 umgesetzt und folglich die zuverlässige Objekterkennung im Zentrumsbildbereich ermöglicht. Auf diese Weise können in dem Zentrumsbildbereich befindliche Objekte sowohl im Nahbereich wie z. B. vorausfahrende Kraftfahrzeuge, als auch im Fernbereich wie z.B. Straßenschilder erkannt werden.

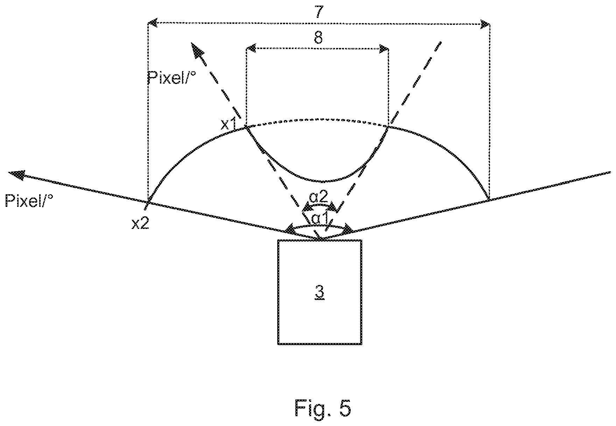

In Figur 5 ist der durch die erste und die zweite Optronik 5, 6 aufgenommene Erfassungsbereich 7, 8 mit dem horizontalen Bildwinkel α1, α2 dargestellt. Bei diesem Ausführungsbeispiel entspricht die Winkelauflösung x2 des Randbildbereichs des ersten Erfassungsbereichs 7 der Winkelauflösung x2 des zweiten Erfassungsbereichs 8. Da der zweite Erfassungsbereich 8 einen kleineren horizontalen Bildwinkel α als der erste Erfassungsbereich 7 aufweist, ist hierdurch der Bildverarbeitungsaufwand im Vergleich zu dem ersten Erfassungsbereich 7 geringer. Alternativ kann jedoch ebenso vorgesehen sein, dass der zweite Erfassungsbereich 8 eine höhere Winkelauflösung xl als der Randbildbereich des ersten Erfassungsbereichs 7 aufweist. Auf diese Weise ist einerseits eine ausreichende Winkelauflösung x2 für den Randbildbereich, andererseits eine hohe Winkelauflösung x1 für den Zentrumsbildbereich ermöglicht. Folglich ist zwar ein erhöhter Rechenaufwand für den zweiten Erfassungsbereich 8 erforderlich, jedoch durch den beschränkten horizontalen Bildwinkel realisierbar, sodass eine detailreiche Objekterkennung im Zentrumsbildbereich erreicht ist. Dies ist beispielsweise bei einer Objekterkennung im Fernbereich weiter als 200 Metern von Vorteil.

### Bezugszeichenliste

- 1: Fahrerassistenzvorrichtung
- 2: Kraftfahrzeug
- 3: Fahrzeugkameravorrichtung
- 4: Bildauswerteeinrichtung
- 5: Erste Optronik
- 6: Zweite Optronik
- 7: Erster Erfassungsbereich
- 8: Zweiter Erfassungsbereich
- 9: Überlappungsabschnitt
- xl: Winkelauflösung des Überlappungsabschnitts
- x2: Winkelauflösung des Randbildbereichs
- α1: Horizontaler Bildwinkel der ersten Optronik
- α2: Horizontaler Bildwinkel der zweiten Optronik
- A: Optische Achse der ersten Optronik

## Patentansprüche

1. Fahrzeugkameravorrichtung (3) zur Aufnahme einer Umgebung zur Objekterkennung in verschiedenen Entfernungs- und Umfeldbereichen eines Kraftfahrzeugs (2),
mit einer ersten und einer zweiten Optronik (5, 6), wobei die erste und die zweite Optronik (5, 6) jeweils eine Optik und einen Bildsensor umfassen,
wobei die erste Optronik (5) ausgebildet ist einen ersten Erfassungsbereich (7) und die zweite Optronik (6) ausgebildet ist einen zweiten Erfassungsbereich (8) von der Umgebung aufzunehmen,
wobei die erste und die zweite Optronik (5, 6) unterschiedlich große Bildwinkel (α1, α2) mit einem Überlappungsabschnitt (9) der Erfassungsbereiche (7, 8) aufweisen,
**dadurch gekennzeichnet, dass** der durch die erste Optronik (5) aufgenommene Überlappungsabschnitt (9) eine andere, reduzierte Winkelauflösung (x1) als im übrigen Bereich des ersten Erfassungsbereichs (7) aufweist,
wobei die erste Optronik (5) einen Bildsensor aufweist, welcher in dem den Überlappungsabschnitt (9) aufnehmenden Bereich niedriger auflösend als in dem den übrigen aufnehmenden Bereich ausgebildet ist und wobei der zweite Erfassungsbereich (8) dem Überlappungsabschnitt (9) entspricht.

2. Fahrzeugkameravorrichtung (3) nach Anspruch 1, wobei in dem von der ersten Optronik (5) aufgenommenen Überlappungsabschnitt (9) eine Winkelauflösung von höchstens 10 Pixeln pro Grad realisiert ist.

3. Fahrzeugkameravorrichtung (3) nach Anspruch 1 oder 2, wobei der durch die erste Optronik (5) aufgenommene Überlappungsabschnitt (9) mit einer niedrigeren Winkelauflösung (x1) als der durch die zweite Optronik (6) aufgenommene Überlappungsabschnitt (9) aufgenommen ist.

4. Fahrzeugkameravorrichtung (3) nach einem der vorhergehenden Ansprüche, wobei in dem von der zweiten Optronik (6) aufgenommenen Überlappungsabschnitt (9) eine Winkelauflösung (x1) von mindestens 20 Pixeln pro Grad realisiert ist.

5. Fahrzeugkameravorrichtung (3) nach einem der vorhergehenden Ansprüche, wobei die erste Optronik (5) mit einem größeren Bildwinkel (α2) als die zweite Optronik (6) ausgebildet ist.

6. Fahrzeugkameravorrichtung (3) nach einem der vorhergehenden Ansprüche, wobei die erste Optronik (5) mit einem horizontalen Bildwinkel (α1) von mindestens 80 Grad ausgebildet ist.

7. Fahrzeugkameravorrichtung (3) nach einem der vorhergehenden Ansprüche, wobei der durch die erste Optronik (5) aufgenommene Überlappungsabschnitt (9) ein Zentrumsbildbereich und der übrige Bereich ein den Zentrumsbildbereich umgebender Randbildbereich des ersten Erfassungsbereichs (7) ist.

8. Fahrzeugkameravorrichtung (3) nach einem der vorhergehenden Ansprüche, wobei die zweite Optronik (6) mit einem horizontalen Bildwinkel (α2) von mindestens 20 Grad und/oder von höchstens 50 Grad ausgebildet ist.

9. Fahrerassistenzvorrichtung (1), mit einer Fahrzeugkameravorrichtung (3) nach einem der vorhergehenden Ansprüche, zur Objekterkennung aus den mit der Fahrzeugkameravorrichtung (3) aufgenommenen Erfassungsbereichen (7, 8) der Umgebung eines Kraftfahrzeugs (2).

10. Fahrerassistenzvorrichtung (1) nach Anspruch 9, wobei die Fahrerassistenzvorrichtung (1) aus den aufgenommenen Erfassungsbereichen (7, 8) zur Auswertung von Ampeln, Fahrspuren, Verkehrszeichen und/oder anderen Verkehrsteilnehmern ausgebildet ist.

## Claims

1. Vehicle camera apparatus (3) for recording a surrounding area for object recognition in various distance and vicinity regions of a motor vehicle (2),
having a first and a second optronics unit (5, 6), wherein the first and the second optronics unit (5, 6) each comprise an optical unit and an image sensor,
wherein the first optronics unit (5) is designed to record a first capture region (7) and the second optronics unit (6) is designed to record a second capture region (8) of the surrounding area,
wherein the first and the second optronics unit (5, 6) have differently sized angles of view (α1, α2) with an overlap section (9) of the capture regions (7, 8),
**characterized in that** the overlap section (9) recorded by way of the first optronics unit (5) has a different, reduced angular resolution (x1) than in the remaining region of the first capture region (7),
wherein the first optronics unit (5) has an image sensor which is designed to have a lower resolution in the region recording the overlap section (9) than in the region recording the rest and wherein the second capture region (8) corresponds to the overlap section (9).

2. Vehicle camera apparatus (3) according to Claim 1, wherein an angular resolution of at most 10 pixels per degree is realized in the overlap section (9) recorded by the first optronics unit (5).

3. Vehicle camera apparatus (3) according to Claim 1 or 2, wherein the overlap section (9) recorded by way of the first optronics unit (5) is recorded with a lower angular resolution (x1) than the overlap section (9) recorded by way of the second optronics unit (6).

4. Vehicle camera apparatus (3) according to one of the preceding claims, wherein an angular resolution (x1) of at least 20 pixels per degree is realized in the overlap section (9) recorded by the second optronics unit (6).

5. Vehicle camera apparatus (3) according to one of the preceding claims, wherein the first optronics unit (5) is designed with a larger angle of view (α2) than the second optronics unit (6).

6. Vehicle camera apparatus (3) according to one of the preceding claims, wherein the first optronics unit (5) is designed with a horizontal angle of view (α1) of at least 80 degrees.

7. Vehicle camera apparatus (3) according to one of the preceding claims, wherein the overlap section (9) recorded by way of the first optronics unit (5) is a centre image region and the remaining region is a peripheral image region of the first capture region (7) surrounding the centre image region.

8. Vehicle camera apparatus (3) according to one of the preceding claims, wherein the second optronics unit (6) is designed with a horizontal angle of view (α2) of at least 20 degrees and/or of at most 50 degrees.

9. Driver assistance apparatus (1), having a vehicle camera apparatus (3) according to one of the preceding claims, for object recognition from the capture regions (7, 8) of the surrounding area of a motor vehicle (2) that are recorded with the vehicle camera apparatus (3).

10. Driver assistance apparatus (1) according to Claim 9, wherein the driver assistance apparatus (1) is designed for evaluating traffic lights, driving lanes, traffic signs and/or other road users from the recorded capture regions (7, 8).

## Revendications

1. Dispositif formant caméra de véhicule (3) destiné à enregistrer un environnement destiné à la reconnaissance d'objets dans différentes zones situées à distance et dans l'environnement d'un véhicule automobile (2),
ledit dispositif comprenant une première et une deuxième optronique (5, 6), la première et la deuxième optronique (5, 6) comprenant chacune un système optique et un capteur d'image,
la première optronique (5) étant conçue pour recevoir une première zone de détection (7) et la deuxième optronique (6) étant conçue pour recevoir une deuxième zone de détection (8) de l'environnement,
la première et la deuxième optronique (5, 6) ayant des angles d'image (α1, α2) de différentes tailles dont les zones de détection (7, 8) présentent une portion de chevauchement (9),
**caractérisé en ce que** la portion de chevauchement (9) enregistrée par la première optronique (5) présente une résolution angulaire réduite (x1) différente de celle de la zone restante de la première zone de détection (7), la première optronique (5) comportant un capteur d'image qui est conçu pour présenter une résolution qui est plus faible dans la zone d'enregistrement de la portion de chevauchement (9) que dans la zone d'enregistrement restante, et la deuxième zone de détection (8) correspondant à la portion de chevauchement (9).

2. Dispositif formant caméra de véhicule (3) selon la revendication 1, la résolution angulaire dans la portion de chevauchement (9) enregistrée par la première optronique (5) étant de 10 pixels par degré maximum.

3. Dispositif formant caméra de véhicule (3) selon la revendication 1 ou 2, la portion de chevauchement (9) enregistrée par la première optronique (5) étant enregistrée avec une plus faible résolution angulaire (x1) que la portion de chevauchement (9) enregistrée par la deuxième optronique (6).

4. Dispositif formant caméra de véhicule (3) selon l'une des revendications précédentes, la résolution angulaire (xl) dans la portion de chevauchement (9) enregistrée par la deuxième optronique (6) étant d'au moins 20 pixels par degré.

5. Dispositif formant caméra de véhicule (3) selon l'une des revendications précédentes, la première optronique (5) étant conçue avec un plus grand angle d'image (α2) que la deuxième optronique (6).

6. Dispositif formant caméra de véhicule (3) selon l'une des revendications précédentes, la première optronique (5) étant conçue avec un angle d'image horizontal (α1) d'au moins 80 degrés.

7. Dispositif formant caméra de véhicule (3) selon l'une des revendications précédentes, la portion de chevauchement (9) enregistrée par la première optronique (5) étant une zone d'image centrale et la zone restante étant une zone d'image de bord de la première zone de détection (7) qui entoure la zone d'image centrale.

8. Dispositif formant caméra de véhicule (3) selon l'une des revendications précédentes, la deuxième optronique (6) étant conçue avec un angle d'image horizontal (α2) d'au moins 20 degrés et/ou de 50 degrés maximum.

9. Dispositif d'aide à la conduite (1), comprenant un dispositif formant caméra de véhicule (3) selon l'une des revendications précédentes destiné à la reconnaissance d'objets à partir des zones de détection (7, 8) de l'environnement d'un véhicule automobile (2) qui ont été enregistrées avec le dispositif formant caméra de véhicule (3).

10. Dispositif d'aide à la conduite (1) selon la revendication 9, le dispositif d'aide à la conduite (1) étant conçu pour évaluer des feux tricolores, des voies de roulement, des panneaux de signalisation et/ou d'autres usagers de la route à partir des zones de détection enregistrées (7, 8).
